# EUROPÄISCHE PATENTSCHRIFT

(11) **EP 3 390 852 B1**
(45) Veröffentlichungstag und Bekanntmachung des Hinweises auf die Patenterteilung: **11.03.2020**
(21) Anmeldenummer: 16810361.2
(22) Anmeldetag: 13.12.2016
(51) Int. Cl.: F16D 55/226, F16D 65/092, F16D 65/12, F16D 69/00, F16D 65/38

(54) **SCHWIMMSATTEL-SCHEIBENBREMSE**
FLOATING-CALIPER DISK BRAKE
FREIN À DISQUE À ÉTRIER FLOTTANT

(30) Priorität: 16.12.2015 DE 102015121944
(43) Veröffentlichungstag der Anmeldung: 24.10.2018
(73) Patentinhaber: KNORR-BREMSE Systeme für Nutzfahrzeuge GmbH, 80809 München (DE)
(72) Erfinder: KLINGNER, Matthias, 82272 Moorenweis (DE); PESCHEL, Michael, 82296 Schöngeising (DE); STICH, Johann, 94560 Offenberg/Aschenau (DE)
(86) Internationale Anmeldenummer: PCT/EP2016/080832
(87) Internationale Veröffentlichungsnummer: WO 2017/102750

(56) Entgegenhaltungen:
- DE-A1- 1 950 178
- DE-A1-102008 056 161
- GB-A- 1 201 370
- JP-A- 2006 002 855

## Beschreibung

Die vorliegende Erfindung betrifft eine Schwimmsattel-Scheibenbremse eines Nutzfahrzeugs gemäß dem Oberbegriff des Anspruchs 1.

Gattungsgemäße Schwimmsattel-Scheibenbremsen bestehen im Wesentlichen aus einer Bremsscheibe, einem die Bremsscheibe überspannenden ortsfesten Bremsträger mit jeweiligen Belagschächten zur Aufnahme von beidseits der Bremsscheibe angeordneten Bremsbelägen sowie einem relativ zum Bremsträger axial zur Drehachse der Bremsscheibe verschiebbaren Bremssattel. In dem Bremssattel ist dabei eine Zuspanneinheit und einer Nachstelleinheit angeordnet. Beim Zuspannen der Schwimmsattel-Scheibenbremse drücken Druckstücke der Zuspanneinheit gegen den zuspannseitigen Bremsbelag. Diese Zuspannkraft wird nach Überwindung eines Lüftspiels zwischen dem zuspannseitigen Bremsbelag und der Bremsscheibe über den Bremssattel auf den reaktionsseitigen Bremsbelag übertragen, wobei ein Sattelrücken des Bremsbelags den reaktionsseitigen Bremsbelag gegen die Bremsscheibe drückt.

Im Verlauf der Lebensdauer müssen infolge des Verschleißes der Reibbeläge der Bremsbeläge und der Reibringflächen der Bremsscheibe die Positionierung des Bremssattels mithilfe der Nachstelleinrichtung nachgestellt werden.

Eine Schwimmsattel-Scheibenbremse hat dabei ein bestimmtes zulässiges Verschleißmaß, das sich aus den Reibbelagdicken der Bremsbeläge und der Dicke der Reibringfläche der Bremsscheibe zusammensetzt.

Die Reibbelagdicken und die Gestaltung der Bremsscheibe sind dabei symmetrisch ausgelegt, so dass auf beiden Seiten der Bremsscheibe das gleiche Verschleißmaß vorliegt.

Aus der JP 2006 002 855 A ist eine Schwimmsattel-Scheibenbremse bekannt, bei der bei gleichem Volumen der Reibbeläge im Neuzustand die Reibbelagdicke des reaktionsseitigen Bremsbelags kleiner der Reibbelagdicke des zuspannseitigen Bremsbelags ist.

Aufgabe der vorliegenden Erfindung ist es, bei gleichbleibender Länge von Serviceintervallen, in denen die Bremsbeläge bzw. die Bremsscheibe auszutauschen sind, den Verschiebeweg des Bremssattels weiter reduzieren zu können.

Diese Aufgabe wird durch eine Schwimmsattel-Scheibenbremse mit den Merkmalen des Anspruchs 1 gelöst.

Die erfindungsgemäße Schwimmsattel-Scheibenbremse eines Nutzfahrzeugs zeichnet sich dadurch aus, dass die Reibringdicke der Bremsscheibe auf der Seite des Bremsbelags mit der kleineren Reibbelagdicke kleiner als die Reibringdicke der Bremsscheibe auf der Seite des Bremsbelags mit der größeren Reibbelagdicke ist.

Dadurch ist der erforderliche Verschleißnachstellweg des Bremssattels zusätzlich um den Betrag der Reduktion der Reibringdicke der Bremsscheibe verkleinerbar.

Dadurch ist ermöglicht, dass bei gleichbleibenden Serviceintervallen der Verschiebeweg des Bremssattels weiter reduziert werden kann. Die sich daraus ergebenden Bauraumvorteile können entweder in eine höhere Festigkeit der Komponenten der Scheibenbremse oder auch für andere Bauteile am Fahrzeug genutzt werden.

Denkbar ist auch, die Reduzierung des Verschiebewegs des Bremssattels zur Erhöhung der Festigkeit bzw. Steifigkeit des Bremssattelrückens zu nutzen.

Die Reduzierung der Belagdicke des reaktionsseitigen Bremsbelags ist besonders vorteilhaft, da für die Krafteinleitung in den Bremsbelag beim Zuspannen über die Belaganlagefläche des Bremssattelrückens eine große Fläche zur Verfügung steht.

Vorteilhafte Ausführungsvarianten der Erfindung sind Gegenstand der Unteransprüche.

Der Verschleißnachstellweg des Bremssattels ist bevorzugt an die Reibbelagdicke des Bremsbelags mit der kleineren Reibbelagdicke angepasst.

Gemäß einer bevorzugten Ausführungsvariante ist die Bremsscheibe in einer Bremsscheibenöffnung des Bremsträgers derart positioniert, dass der Abstand einer dem reaktionsseitigen Belagschacht zugewandten Reibringfläche der Bremsscheibe zu dem reaktionsseitigen Belagschacht des Bremsträgers geringer ist als der Abstand einer dem zuspannseitigen Belagschacht zugewandten Reibringfläche der Bremsscheibe zu dem zuspannseitigen Belagschacht des Bremsträgers.

Ein weiterer Vorteil dieser Variante ergibt sich dadurch, dass durch die Reduktion der Reibringdicke der Bremsscheibe die Lagerung der Bremsscheibe relativ zum Rad des Nutzfahrzeugs verkürzt werden kann.

Ein mit der Verkleinerung der Reibbelagdicke eines der Reibbeläge bei gleichbleibendem Volumen des Reibbelags einhergehende Vergrößerung der Reibfläche hat den weiteren Vorteil, dass die Gefahr eines Hitzerisses der Bremsscheibe vermindert wird.

Nachfolgend werden bevorzugte Ausführungsvarianten anhand der beiliegenden Zeichnung näher erläutert. Es zeigt:

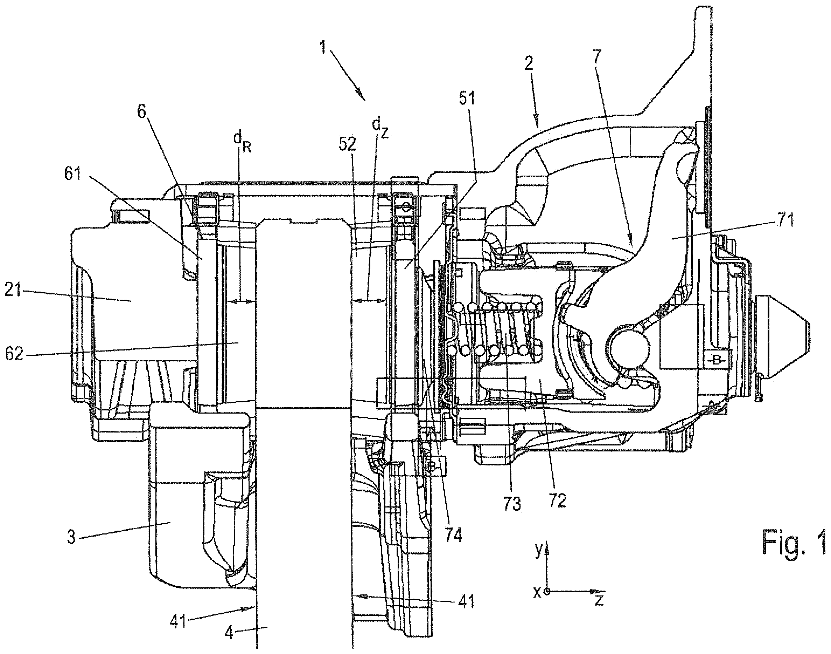

- Figur 1: eine Seitenschnittansicht durch einen Teil einer Schiebesattel-Scheibenbremse.

In der nachfolgenden Figurenbeschreibung beziehen sich Begriffe wie oben, unten, links, rechts, vorne, hinten usw. ausschließlich auf die in den jeweiligen Figuren gewählte beispielhafte Darstellung und Position der Scheibenbremse, der Bremsscheibe, des Bremsträgers, des Bremssattels, der Bremsbeläge und dergleichen. Diese Begriffe sind nicht einschränkend zu verstehen, d.h., durch verschiedene Arbeitsstellungen oder die spiegelsymmetrische Auslegung oder dergleichen können sich diese Bezüge ändern.

In Figur 1 ist mit dem Bezugszeichen 1 insgesamt ein Teil einer Schwimmsattel-Scheibenbremse eines Nutzfahrzeugs bezeichnet. Die Schwimmsattel-Scheibenbremse weist eine Bremsscheibe 4 auf sowie einen ortsfest fixierten Bremsträger 3, der die Bremsscheibe 4 rahmenartig überspannt, sowie einen in einer Richtung z, die der Bremsscheibendrehachse entspricht, relativ zum Bremsträger 3 verschiebbaren Bremssattel 2.

Der Bremsträger 3 weist dabei, in Richtung z betrachtet, beiderseits der Bremsscheibe 4 Trägerhörner auf, die sich in y-Richtung erstrecken und zur Abstützung der Bremsbeläge 5, 6 in Umfangsrichtung der Bremsscheibe 4 dienen. Die Trägerhörner auf jeder Seite der Bremsscheibe 4 bilden dabei zusammen mit einem jeweiligen die Trägerhörner miteinander verbindenden Steg einen Belagschacht, in dem die Bremsbeläge 5, 6 aufgenommen sind.

Der Bremssattel 2 übergreift die Bremsscheibe 4, wobei auf einer radabgewandten Seite der Bremsscheibe 4 in dem Bremssattel 2 eine Zuspanneinrichtung 7 aufgenommen ist. Auf einer radzugewandten Seite der Bremsscheibe 4 weist der Bremssattel 2 einen Bremssattelrücken 21 auf.

Die Zuspanneineinrichtung 7 umfasst dabei im Wesentlichen einen Bremshebel 71, der mithilfe eines aus einem (nicht gezeigten) Bremszylinders der Schwimmsattel-Scheibenbremse 1 betätigbar ist und der zur Zuspannung der Scheibenbremse gegen eine Brücke 72 gedrückt wird. Die Brücke 72 drückt ihrerseits auf hier nicht dargestellte Gewinderohre mit an ihren Enden angeordneten Druckstücken 74, die den zuspannseitigen Bremsbelag 5 gegen die Bremsscheibe 4 drücken.

Die dabei aufgebrachte Kraft wird nach Überwindung eines Lüftspiels zwischen dem Bremsbelag 5 und der Bremsscheibe 4 über den Bremssattel 2 auf den reaktionsseitigen Bremsbelag 6 übertragen, wobei sich der Bremssattel 2 dabei in Richtung z zur Zuspannseite des Bremssattels 2 hin bewegt.

Nach erfolgter Bremsung drückt eine Druckfeder 73 der Zuspanneineinrichtung 7 die Brücke 72 zusammen mit dem Gewinderohr und dem Druckstück 74 in die Ausgangslage zurück.

Im Bereich der Zuspanneineinrichtung 7 ist in dem Bremssattel 2 des Weiteren eine Nachstelleinrichtung vorgesehen, die mit der die Position des Bremssattels 2 um einen Verschleißnachstellweg axial zur Drehachse der Bremsscheibe 4, d.h. in Richtung z., nachstellbar ist.

Jeder der Bremsbeläge 5, 6 besteht aus einer Belagträgerplatte 51, 61 und einem an dieser befestigten Reibbelag 52, 62. Wie in Figur 1 gezeigt ist, ist die Dicke d_{R} des reaktionsseitigen Bremsbelags 6 ungleich der Reibbelagdicke d_{Z} des zuspannseitigen Bremsbelags 5. Das Volumen der Reibbeläge 52, 62 des zuspannseitigen Bremsbelags 5 und des reaktionsseitigen Bremsbelags 6 ist dabei, insbesondere im Neuzustand der Bremsbeläge 5, 6, gleich.

Insbesondere ist die Reibbelagdicke d_{R} des reaktionsseitigen Bremsbelags 6 kleiner als die Reibbelagdicke d_{Z} des zuspannseitigen Bremsbelags 5.

Die von der Bremsscheibe 4 aus in z-Richtung betrachtete Seite der Scheibenbremse 1, auf der die Zuspanneineinrichtung 7 im Bremssattel 2 angeordnet ist, wird als Zuspannseite bezeichnet. Die andere, einem Fahrzeugrad des Nutzfahrzeugs zugewandte Seite der Scheibenbremse 1, auf der sich der Bremssattelrücken 21 befindet, wird als Reaktionsseite bezeichnet.

Wie in Figur 1 des Weiteren zu erkennen ist, ist die Reibringdicke der Bremsscheibe 4 auf der Seite des reaktionsseitigen Bremsbelags 6, sprich der Seite des Bremsbelags mit der kleineren Reibbelagdicke d_{R}, kleiner als die Reibringdicke der Bremsscheibe 4 auf der Seite des zuspannseitigen Bremsbelags 5 mit der größeren Reibbelagdicke d_{Z} ist.

Der Verschleißnachstellweg des Bremssattels 2 ist dabei entsprechend an die kleinere Reibbelagdicke d_{R} des reaktionsseitigen Bremsbelags 6 angepasst.

Besonders bevorzugt ist die Bremsscheibe 4 in der Bremsscheibenöffnung des Bremsträgers 2 derart positioniert, dass eine dem reaktionsseitigen Belagschacht zugewandte Reibringfläche 42 der Bremsscheibe 4 dem reaktionsseitigen Belagschacht des Bremsträgers 3 näher ist als eine dem zuspannseitigen Belagschacht zugewandte Reibringfläche 41 der Bremsscheibe 4.

Die Reduzierung der Reibbelagdicke d_{R} des reaktionsseitigen Bremsbelags 6 ist besonders vorteilhaft, da für die Krafteinleitung in den Bremsbelag 6 beim Zuspannen der Scheibenbremse 1 über die Belaganlagefläche im Bremssattelrücken 21 eine sehr große Andruckfläche zur Verfügung steht, die eine gleichmäßige Andrückung an den in der Fläche senkrecht zur Richtung z gegenüber dem Reibbelag 52 des zuspannseitigen Bremsbelags 5 vergrößerten Reibbelag 62 des reaktionsseitigen Bremsbelags 6 ermöglicht.

Insgesamt ergibt sich durch die Reduzierung der Reibbelagdicke d_{R} des reaktionsseitigen Bremsbelags 6 und ggfs. der Reibringdicke der Bremsscheibe 4 eine Verkleinerung des Verschiebeweges des Bremssattels und damit eine Vergrößerung des für andere Zwecke nutzbaren Bauraums der Scheibenbremse.

### Bezugszeichenliste

- 1: Schwimmsattel-Scheibenbremse

- 2: Bremssattel
- 21: Bremssattelrücken

- 3: Bremsträger

- 4: Bremsscheibe
- 41: Reibringfläche
- 42: Reibringfläche

- 5: Bremsbelag
- 51: Belagträgerplatte
- 52: Reibbelag

- 6: Bremsbelag
- 61: Belagträgerplatte
- 62: Reibbelag

- 7: Zuspanneinrichtung
- 71: Bremshebel
- 72: Brücke
- 73: Druckfeder
- 74: Druckstück

- d_{R}: Dicke reaktionsseitiger Reibbelag
- d_{Z}: Dicke zuspannseitiger Reibbelag

## Patentansprüche

1. Schwimmsattel-Scheibenbremse eines Nutzfahrzeugs, aufweisend
- eine Bremsscheibe (4),
- einen die Bremsscheibe (4) überspannenden Bremsträger (3) mit beidseits der Bremsscheibe (4) angeordneten Belagschächten,
- einen die Bremsscheibe (4) übergreifenden, relativ zu dem Bremsträger (3) verschiebbaren Bremssattel (2),
- beidseitig der Bremsscheibe (4) in einem Belagschacht des Bremsträgers (6) angeordnete Bremsbeläge (5, 6) mit einer Belagträgerplatte (51, 61) und einem an dieser befestigten Reibbelag (52, 62),
- wobei ein zuspannseitiger Bremsbelag (5) mithilfe einer Zuspanneinrichtung (7) und ein reaktionsseitiger Bremsbelag (6) mithilfe eines Bremssattelrückens (21) durch Verschieben des Bremssattels (2) gegen die Bremsscheibe (4) drückbar ist,
- wobei der Bremssattel (2) mithilfe einer Nachstelleinrichtung um eine Verschleißnachstellweg axial zur Drehachse der Bremsscheibe (4) nachstellbar ist,
- wobei bei gleichem Volumen der Reibbeläge (52, 62) im Neuzustand die Reibbelagdicke (d_{R}) des reaktionsseitigen Bremsbelags (6) kleiner als die Reibbelagdicke (d_{Z}) des zuspannseitigen Bremsbelags (5) ist,
**dadurch gekennzeichnet, dass**
- die Reibringdicke der Bremsscheibe (4) auf der Seite des Bremsbelags (5, 6) mit der kleineren Reibbelagdicke (d_{R}, d_{Z}) kleiner als die Reibringdicke der Bremsscheibe (4) auf der Seite des Bremsbelags (5, 6) mit der größeren Reibbelagdicke (d_{R}, d_{Z}) ist.

2. Schwimmsattel-Scheibenbremse nach Anspruch 1, **dadurch gekennzeichnet, dass** der Verschleißnachstellweg des Bremssattels (2) an die kleinere Reibbelagdicke (d_{R}) des Bremsbelages (5, 6) mit der kleineren Reibbelagdicke (d_{R}, d_{Z}) angepasst ist.

3. Schwimmsattel-Scheibenbremse nach einem der vorstehenden Ansprüche, **dadurch gekennzeichnet, dass** die Bremsscheibe (4) in einer Bremsscheibenöffnung des Bremsträgers (3) derart positioniert ist, dass der Abstand einer dem reaktionsseitigen Belagschacht zugewandten Reibringfläche (41) der Bremsscheibe (4) zu dem reaktionsseitigen Belagschacht des Bremsträgers (3) geringer ist als der Abstand einer dem zuspannseitigen Belagschacht zugewandten Reibringfläche (41) der Bremsscheibe (4) zu dem zuspannseitigen Belagschacht des Bremsträgers (3).

## Claims

1. Floating-caliper disc brake of a utility vehicle, comprising:
- a brake disc (4),
- a brake carrier (3) spanning across the brake disc (4) with pad shafts arranged on each side of the brake disc (4),
- a brake caliper (2) that overlaps the brake disc (4) and can be displaced relative to the brake carrier (3),
- brake pads (5, 6) on each side of the brake disc (4), which are arranged in a pad shaft of the brake carrier (3) with a pad carrier plate (51, 61) and a friction lining (52, 62) attached to the said pads,
- wherein a brake pad (5) on the application side can be pressed against the brake disc (4) with the help of an application device (7) and a brake pad (6) on the reaction side can be pressed against the brake disc (4) with the help of a brake caliper back (21) by displacing the brake caliper (2) toward the brake disc (4),
- wherein the brake caliper (2) can be adjusted with the help of an adjustment device through a wear adjustment travel path axially relative to the rotation axis of the brake disc (4),
- wherein with equal volumes of the friction linings (52, 62) in the new condition, the friction lining thickness (d_{R}) of the reaction-side brake pad (6) is smaller than the friction lining thickness (d_{Z}) of the application-side brake pad (6).
**characterised in that**
- the friction ring thickness of the brake disc (4) on the side of the brake pad (5, 6) with the smaller friction lining thickness (d_{R}, d_{Z}) is smaller than the friction ring thickness of the brake disc (4) on the side of the brake pad (5, 6) with the larger friction lining thickness (d_{R}, d_{Z}).

2. Floating-caliper disc brake according to Claim 1, **characterised in that** the wear adjustment travel path of the brake caliper (2) is matched to the smaller friction lining thickness (d_{R}) of the brake pad (5, 6) with the smaller friction lining thickness (d_{R}, d_{Z}).

3. Floating-caliper disc brake according to either of the preceding claims, **characterised in that** the brake disc (4) is positioned in a brake disc opening of the brake carrier (3) in such manner that the distance between a friction ring surface (42) of the brake disc (2) facing toward the reaction-side pad shaft of the brake carrier (3) and the reaction-side pad shaft of the brake carrier (3) is smaller than the distance between a friction ring surface (41) of the brake disc (4) facing toward the application-side pad shaft and the application-side pad shaft of the brake carrier (3).

## Revendications

1. Frein à disque à étrier flottant d'un véhicule utilitaire, comportant
- un disque (4) de frein,
- un support (3) de frein, chevauchant le disque (4) de frein et ayant des puits de garniture disposés des deux côtés du disque (4) de frein,
- un étrier (2) de frein, chevauchant le disque (4) de frein et pouvant se déplacer par rapport au support (3) de frein,
- des garnitures (5, 6) de frein, disposées des deux côtés du disque (4) de frein dans un puits de garniture du support (6) de frein, avec une plaque (51, 61) de support de garniture et une garniture (52, 62) de friction, qui y est fixée,
- dans lequel une garniture (5) de frein peut, du côté du serrage, à l'aide d'un dispositif (7) de serrage, et une garniture (6) de frein du côté de la réaction, à l'aide d'un dos (21) d'étrier de frein, être poussée sur le disque (4) de frein par déplacement de l'étrier (2) de frein,
- dans lequel l'étrier (2) de frein peut, à l'aide d'un dispositif de rattrapage, être rattrapé d'un trajet de rattrapage d'usure axialement à l'axe de rotation du disque (2) de frein,
- dans lequel, pour un même volume des garnitures (52, 62) de friction, dans l'état nouveau, l'épaisseur (d_{R}) de la garniture (6) de frein du côté de la réaction est plus petite que l'épaisseur (d_{Z}) de la garniture (5) de frein du côté du serrage,
**caractérisé en ce que**
- l'épaisseur annulaire de friction du disque (4) de frein du côté de la garniture (5, 6) de frein ayant l'épaisseur (d_{R}, d_{Z}) de garniture de friction la plus petite est plus petite que l'épaisseur annulaire de friction du disque (4) de frein du côté de la garniture (5, 6) de frein ayant l'épaisseur (d_{R}, d_{Z}) de garniture de friction la plus grande.

2. Frein à disque à étrier flottant suivant la revendication 1, **caractérisé en ce que** le trajet de rattrapage de l'usure de l'étrier (2) de frein, sur l'épaisseur (d_{R}) de la garniture de friction la plus petite de la garniture (5, 6) de frein, est adapté à l'épaisseur (d_{R}, d_{Z}) la plus petite de la garniture de friction.

3. Frein à disque à étrier flottant suivant l'une des revendications précédentes, **caractérisé en ce que** le disque (4) de frein est placé dans une ouverture de disque de frein du support (3) de frein, de manière à ce que la distance entre une surface (41) annulaire de friction tournée vers le puits de garniture du côté de la réaction du disque (4) de frein et le puits de garniture du côté de la réaction du support (3) de frein soit plus petite que la distance entre la surface (41) annulaire de friction tournée vers le puits de garniture du côté du serrage du disque (4) de frein et le puits de garniture du côté du serrage du support (3) de frein.
